# EUROPÄISCHE PATENTSCHRIFT

(11) **EP 3 253 472 B1**
(45) Veröffentlichungstag und Bekanntmachung des Hinweises auf die Patenterteilung: **31.07.2019**
(21) Anmeldenummer: 16702701.0
(22) Anmeldetag: 01.02.2016
(51) Int. Cl.: B01D 21/28, B01D 17/04, G01N 1/40

(54) **VERFAHREN UND VORRICHTUNG ZUR ABTRENNUNG VON STOFFEN AUS FLÜSSIGKEITEN DURCH AGGLOMERATION MIT ULTRASCHALL UND SEDIMENTATION**
METHOD AND DEVICE FOR SEPARATING SUBSTANCES FROM LIQUIDS BY AGGLOMERATION BY MEANS OF ULTRASOUND AND SEDIMENTATION
PROCÉDÉ ET DISPOSITIF DE SEPARATION DE MATIÈRES DE LIQUIDES PAR AGGLOMERATION AU MOYEN D'ULTRASONS ET PAR SÉDIMENTATION

(30) Priorität: 03.02.2015 DE 102015101542
(43) Veröffentlichungstag der Anmeldung: 13.12.2017
(73) Patentinhaber: ACO Severin Ahlmann GmbH & Co. KG, 24782 Büdelsdorf (DE)
(72) Erfinder: EULENSTEIN, Marco, 67731 Otterberg (DE); LESER, Alexander, 36469 Tiefenort (DE); PALUCHOWSKI, Dariusz, 36039 Fulda (DE); BEHRENS, Jan Marten, 28879 Grasberg (DE); FRIEND, James, Victoria, Victoria 3166 (AU); LINDNER, Gerhard, 96450 Coburg (DE); REISSENWEBER, Marina, 97355 Rüdenhausen (DE); TIETZE, Sabrina, 96361 Steinbach am Wald (DE)
(74) Vertreter: Kilchert, Jochen
(86) Internationale Anmeldenummer: PCT/EP2016/052067
(87) Internationale Veröffentlichungsnummer: WO 2016/124542

(56) Entgegenhaltungen:
- US-A1- 2006 049 114
- US-A1- 2013 330 247
- US-A1- 2014 011 240
- US-A1- 2014 377 834
- GREVE D W ET AL: "Particle concentration by acoustic standing waves", ULTRASONICS SYMPOSIUM (IUS), 2012 IEEE INTERNATIONAL, IEEE, 7. Oktober 2012 (2012-10-07), Seiten 2081-2084, XP032434408, ISSN: 1948-5719, DOI: 10.1109/ULTSYM.2012.0520 ISBN: 978-1-4673-4561-3
- J.P. BLACK ET AL: "Microsphere capture and perfusion in microchannels using flexural plate wave structures", 2002 IEEE ULTRASONICS SYMPOSIUM, 2002. PROCEEDINGS., 1. Januar 2002 (2002-01-01), Seiten 475-479, XP055060023, DOI: 10.1109/ULTSYM.2002.1193445 ISBN: 978-0-78-037582-6

## Beschreibung

Die Erfindung betrifft ein Verfahren sowie eine zur Durchführung des Verfahrens geeignete Vorrichtung zur Abtrennung von Stoffen verschiedener Dichte aus Flüssigkeiten nach dem Oberbegriff des Patentanspruches 1 bzw. 5.

Verschiedene Stoffe, die in Flüssigkeiten suspendiert oder emulgiert sind, müssen oftmals aus den Flüssigkeiten abgeschieden bzw. abgetrennt werden.

Ein typisches Beispiel hierfür sind Abwässer, die Fette, Öle oder Feststoffe verschiedenster Art enthalten. Hierzu macht man sich oftmals zunutze, dass die abzutrennenden Stoffe ein anderes spezifisches Gewicht aufweisen als die Flüssigkeit, in der sie emulgiert oder suspendiert sind. Um die Zeitdauer zu verkürzen, innerhalb derer die Stoffe aufsteigen bzw. absinken, versucht man, die Partikel zu koagulieren, also zu größeren und schneller aufsteigenden bzw. absinkenden Einzelkörpern zusammenzuführen.

Ein Verfahren zur Abtrennung von Stoffen verschiedener Dichte aus einer Flüssigkeit ist das Koagulieren durch Ultraschall. Hierfür werden Ultraschall-Stehwellenfelder eingesetzt, bei denen in einem Trennbehälter, der von der zu behandelnden Flüssigkeit durchströmt wird, von einem oder mehreren Ultraschallwandlern Stehwellenfelder erzeugt werden. Hier wird auf die EP 1 627 673 A1, die WO 1988/009210 A1, die US 2014/011240 A1 oder die WO 90/05008 A1 verwiesen. Die stehenden Schallwellenfelder werden in der Flüssigkeit durch senkrechte Rückreflektion eines von einem elektroakustischen Wandler ausgesandten ebenen Schallwellenfeldes oder durch phasensynchrone Ausstrahlung von zwei ebenen Schallwellenfeldern von einander gegenüberliegenden elektroakustischen Wandlern erzeugt. In diesen stehenden Schallwellenfeldern bilden sich räumlich und zeitlich konstante Knoten und Bäuche der Schalldruckverteilung aus, in denen sich Partikel oder Tröpfchen mit von der Trägerflüssigkeit abweichender akustischer Impedanz (z.B. Öltropfen im Wasser) ansammeln und zur Koagulation gezwungen werden. Durch diese Volumenzunahme wachsen (z.B. bei Ölen oder Fetten) die Auftriebskräfte, so dass nach einer relativ kurzen "Bestrahlungszeit" eine Ölschicht bzw. Fettschicht auf dem Wasser gebildet wird, die abgezogen werden kann.

Die bekannten mit Ultraschall-Stehwellenfeldern arbeitenden Verfahren bzw. Vorrichtungen haben den Nachteil, dass sich bei bereits kleinen Veränderungen der Randbedingungen, insbesondere der Temperatur oder der Zusammensetzung der Trägerflüssigkeit oder bei Ablagerungen an den Wänden des Trennbehälters die Interferenzbedingungen verändern können und sich damit die Ausbildung der Stehwellenfelder verändert, was wiederum sich verändernde Abscheidewirkungen zur Folge hat.

Weiterhin ist es bei den bekannten Ultraschall-Vorrichtungen und Verfahren nachteilig, dass die Größe der ebenen Schallwellenfelder bzw. der Bereiche, in denen Interferenzen entstehen, durch die Anordnung der Ultraschallwandler bestimmt sind. Außerhalb deren Abstrahlbereichen treten praktisch keine Interferenzen auf.

Der Erfindung liegt die Aufgabe zu Grunde, Verfahren und Vorrichtungen der eingangs genannten Art dahingehend weiterzubilden, dass eine verbesserte Abscheidewirkung sicher gewährleistet wird.

Diese Aufgabe wird durch ein Verfahren nach Anspruch 1 und eine Vorrichtung nach Anspruch 5 gelöst.

Insbesondere wird diese Aufgabe durch ein Verfahren zur Abtrennung von Stoffen verschiedener Dichten aus Flüssigkeiten, z.B. Feststoffe und/oder Fette aus Wasser in einem Trennbehälter, wobei die Flüssigkeit mit Ultraschallwandlern derart beaufschlagt wird, dass Partikel oder Tröpfchen koagulieren und durch Volumenzunahme durch resultierende Auf- oder Abtriebskräfte von der Flüssigkeit abgetrennt werden, dadurch gelöst, dass die Ultraschallwellen als Lamb-Wellen in mindestens einer Wand des Trennbehälters erzeugt und in einem von 90° verschiedenen Einstrahlwinkel (ϕ) derart in die Flüssigkeit abgestrahlt werden, dass ein (stehendes) Interferenzmuster erzeugt wird, dessen Knoten- und Bauchbereiche sich aus dem Einstrahlwinkel (ϕ) ergeben.

Dadurch, dass die Ultraschallwellen als Lamb-Wellen erzeugt werden, also als Schwingungen der Behälterwände, bei denen Auslenkungen sowohl senkrecht zu den Wänden als auch in Ausbreitungsrichtung, also parallel zu den Wänden vorkommen, ergibt sich ein Abstrahlwinkel, der ungleich der Wand-Senkrechten ist. Es hat sich hierbei gezeigt, dass nicht nur das "bestrahlte" Raumvolumen vergrößert werden kann, da auch außerhalb des Volumens zwischen den Ultraschallwandlern (bzw. zwischen Ultraschallwandler und reflektierender Fläche) ein Ultraschallfeld entsteht. Es ist vielmehr so, dass Veränderungen der Parameter der Flüssigkeit, wie Temperatur, Zusammensetzung oder Ablagerungen an der Behälterwand geringeren Einfluss auf den Gesamtvorgang haben. Es wird also die Lage des Interferenzmusters im Behälter, nicht aber die Ausbildung eines Interferenzmusters an sich beeinflusst. In jedem Fall findet eine signifikante Abscheidewirkung von z. B. Öl-Tröpfchen im Wasser statt.

Vorzugsweise werden die Ultraschallwellen von einander gegenüberliegenden Seiten des Trennbehälters in die Flüssigkeit abgestrahlt. Dadurch ergibt sich eine erhöhte Abscheidewirkung.

Die Ultraschallwellen werden hierbei von vorzugsweise parallel zueinander liegenden Flächen des Trennbehälters abgestrahlt, so dass sich definierte Interferenzbereiche bilden.

Die Ultraschallwellen werden vorzugsweise phasensynchron abgestrahlt, was die Ausbildung von Interferenzbereichen weiter verbessert.

Die oben genannte Aufgabe wird auch durch eine Vorrichtung zur Abtrennung von Stoffen verschiedener Dichte aus Flüssigkeiten, z.B. von Feststoffen oder Fetten aus Wasser, umfassend einen Trennbehälter und Ultraschallwandler, dadurch gelöst, dass die Ultraschallwandler so an mindestens einer Wand des Trennbehälters angebracht sind, dass die Ultraschallwellen als Lamb-Wellen erzeugt und in einem von 90° verschiedenen Einstrahlwinkel (ϕ) in die Flüssigkeit abgestrahlt werden, so dass ein (stehendes) Interferenzmuster erzeugt wird, dessen Knoten- und Bauchbereiche sich aus dem Einstrahlwinkel (ϕ) ergeben. Die oben genannten Vorteile werden also durch diese Vorrichtung erzeugt.

Der Trennbehälter umfasst vorzugsweise zwei mindestens abschnittsweise einander gegenüberliegende Wandabschnitte, an denen Ultraschallwandler angebracht sind. Dadurch wird eine erhöhte Abscheideleistung (gegenüber einer Wandler-Wand und einer Reflexionswand) erzeugt.

Die einander gegenüberliegenden Wandabschnitte verlaufen vorzugsweise parallel zueinander, wodurch die Abscheidewirkung weiter verstärkt wird.

Die Ultraschallwandler werden vorzugsweise phasensynchron angesteuert, so dass die Bereiche der Interferenzen definiert und konstant sind.

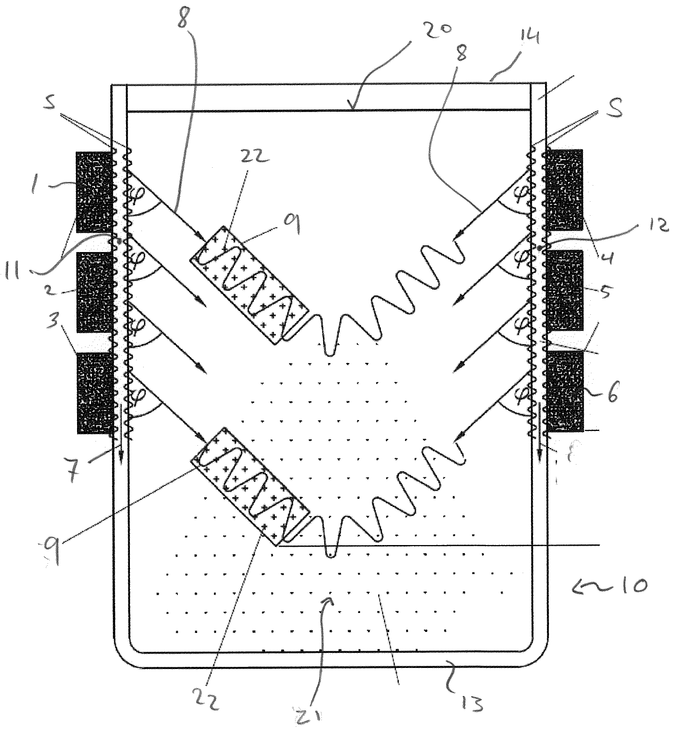

Nachfolgend wird eine Ausführungsform der Erfindung (schematisiert) anhand der beiliegenden Abbildung näher erläutert.

Mit der Bezugsziffer 10 ist ein Behälter bezeichnet, in welchem das Stoffgemisch enthalten ist oder der vom Stoffgemisch durchströmt wird. Der Behälter 10 weist Wände 11 und 12 sowie einen Boden 13 und einen Oberrand 14 auf. In der zu behandelnden Flüssigkeit 20 befinden sich Öl- oder Fett-Tröpfchen 21.

An den Wänden 11 und 12 sind - einander gegenüberliegend - Ultraschallwandler 1 bis 6 derart angebracht, dass sie in den Wänden 11 und 12 Lamb-Wellen erzeugen, also Schwingungen S der Behälterwände 11 und 12, welche sich in der mit einem Pfeil 7 bezeichneten Richtung bewegen. Es findet also einerseits eine Schwingung der Wände 11, 12 senkrecht zu ihrer Flächenausdehnung, andererseits eine Schwingung parallel zu den Wänden 11, 12 statt, woraus eine resultierende Schwingung entsteht. Diese resultierende Schwingung erzeugt nun eine Wellenresultierende, die in der beiliegenden Abbildung mit einem Pfeil 8 bezeichnet ist, der einen Winkel (ϕ) zur Oberfläche der Wände 11, 12 aufweist.

Da die Schwingungen mit ihrem Abstrahlwinkel (ϕ) von beiden Wänden 11 und 12 des Behälters erzeugt werden, treffen sie aufeinander und bilden Interferenzmuster 9 in der zu behandelnden Flüssigkeit. In diesen Interferenzmustern 9 ergeben sich stehende Wellen mit Wellen-Bäuchen und -Tälern, was dazu führt, dass die Öl- oder Fett-Tröpfchen 21 zu Clustern, also koagulierten Öl- oder Fett-Tröpfchen 22 sich zusammenlagern. Diese koagulierten Öl-Tröpfchen steigen nun leichter auf, als die noch nicht koagulierten Öl- oder Fett-Tröpfchen 21, so dass sie dann von der Oberfläche der Flüssigkeit 20 abgenommen werden können.

Bei einer geeigneten Frequenzwahl werden also durch Moden-Konversion Schallwellen unter einem Winkel (ϕ) in die Flüssigkeit abgestrahlt, wobei sich der Winkel (ϕ) nach dem Berechnungsgesetz aus dem Verhältnis der Schallgeschwindigkeit in der Flüssigkeit und der Ausbreitungsgeschwindigkeit der Lamb-Wellen auf der Behälterwand ergibt. Die resultierenden Interferenzmuster haben nun Knoten- und Bauchbereiche nicht mehr parallel zu den Behälterwänden, sondern ergeben sich aus den Einstrahlwinkeln.

### Bezugszeichenliste

- 1-6: Ultraschallwandler
- 7: Welle 1
- 8: Wellenresultierende
- 9: Interferenzmuster
- 10: Behälter
- 11: Wand
- 12: Wand
- 13: Boden
- 14: Oberrand
- 20: Flüssigkeit
- 21: Öl-Tröpfchen
- 22: Koagulierte Öl- oder Fett-Tröpfchen

## Patentansprüche

1. Verfahren zur Abtrennung von Stoffen verschiedener Dichte aus Flüssigkeiten, z.B. Feststoff und/oder Fetten oder Ölen aus Wasser in einem Trennbehälter, wobei die Flüssigkeit mit Ultraschallwellen derart beaufschlagt wird, dass sich Partikel oder Tröpfchen aneinander lagern und koagulieren und durch Volumenzunahme durch resultierende Auf- oder Abtriebskräfte von der Flüssigkeit abgetrennt werden,
wobei die Ultraschallwellen als Lamb-Wellen in mindestens einer Wand des Trennbehälters erzeugt und in einem von 90° verschiedenen Einstrahlwinkel (ϕ) derart in die Flüssigkeit abgestrahlt werden, dass ein stehendes Interferenzmuster erzeugt wird, dessen Knoten- und Bauchbereiche sich aus dem Einstrahlwinkel (ϕ) ergeben,
**dadurch gekennzeichnet, dass**
die mittels an gegenüberliegenden Wandabschnitten angebrachten Ultraschallwandler erzeugten Ultraschallwellen von einander gegenüberliegenden Seiten des Trennbehälters in die Flüssigkeit abgestrahlt werden.

2. Verfahren nach Anspruch 1,
**dadurch gekennzeichnet, dass**
die Ultraschallwellen von parallel zueinander liegenden Flächen des Trennbehälters abgestrahlt werden.

3. Verfahren nach einem der vorhergehenden Ansprüche,
**dadurch gekennzeichnet, dass**
die Ultraschallwellen phasensynchron abgestrahlt werden.

4. Vorrichtung zur Abtrennung von Stoffen verschiedener Dichte aus Flüssigkeiten, z.B. von Feststoffen oder Fetten oder Ölen aus Wasser, umfassend einen Trennbehälter (10) und Ultraschallwandler (1-6),
wobei die Ultraschallwandler (1-6) so an mindestens einer Wand (11, 12) des Trennbehälters (10) angebracht sind, dass die Ultraschallwellen als Lamb-Wellen (8) erzeugt und in einem von 90° verschiedenen Einstrahlwinkel (ϕ) in die Flüssigkeit (20) abgestrahlt werden, so dass ein stehendes Interferenzmuster (9) erzeugt wird, dessen Knoten- und Bauchbereiche sich aus dem Einstrahlwinkel (ϕ) ergeben,
**dadurch gekennzeichnet, dass**
der Trennbehälter (20) zwei mindestens abschnittsweise einander gegenüberliegende Wandabschnitte aufweist, an denen die Ultraschallwandler (1-6) angebracht sind.

5. Vorrichtung nach Anspruch 4,
**dadurch gekennzeichnet, dass**
die einander gegenüberliegenden Wandabschnitte parallel zueinander verlaufen.

6. Vorrichtung nach einem der Ansprüche 4 oder 5,
**dadurch gekennzeichnet, dass**
die Ultraschallwandler (1 bis 6) phasensynchron angesteuert werden.

## Claims

1. A method for separating substances of different densities from liquids, e.g. solid substances and/or fats or oils from water in a separating vessel, wherein the liquid is applied with ultrasonic waves such that particles or droplets accumulate and coagulate and are separated from the liquid by a volume increase through resulting uplift or downlift forces,
wherein the ultrasonic waves are generated as Lamb waves in at least one wall of the separating vessel and are radiated at a angle of arrival (ϕ) differing from 90° into the liquid such that a stationary interference pattern is generated, the node and antinode areas thereof resulting from the angle of arrival (ϕ),
**characterized in that**
the ultrasonic waves generated by means of ultrasonic transducers mounted to opposite wall portions are irradiated into the liquid from mutually opposite sides of the separating vessel.

2. The method according to claim 1,
**characterized in that**
the ultrasonic waves are irradiated from surfaces of the separating vessel being mutually opposite.

3. The method according to any one of the preceding claims,
**characterized in that**
the ultrasonic waves are irradiated in phase synchronicity.

4. A device for separating substances of different densities from liquids, e.g. solid substances and/or fats or oils from water, comprising a separating vessel (10) and ultrasonic transducers (1 - 6), wherein the ultrasonic transducers (1 - 6) are mounted to at least one wall (11, 12) of the separating vessel (10) such that the ultrasonic waves are generated as Lamb waves (8) and are irradiated at a angle of arrival (ϕ) different from 90° into the liquid (20) so that a stationary interference pattern is generated, the node and antinode areas thereof resulting from the angle of arrival (ϕ),
**characterized in that**
the separating vessel (20) comprises two wall portions that are mutually opposite at least in sections, to which wall portions the ultrasonic transducers (1 - 6) are mounted.

5. The device according to claim 4,
**characterized in that**
the mutually opposite wall portions extend in parallel to one another.

6. The device according to any one of claims 4 or 5,
**characterized in that**
the ultrasonic transducers (1 to 6) are driven in phase synchronicity.

## Revendications

1. Procédé de séparation de matières de densités diverses à partir de liquides, par ex. de matières solides et/ou de graisses ou d'huiles à partir d'eau dans un récipient de séparation, sachant que le liquide est soumis à des ondes ultrasonores de telle façon que des particules ou des gouttelettes s'amalgament les unes aux autres et coagulent et soient séparées du liquide par augmentation de volume suite à des forces ascensionnelles ou descensionnelles résultantes,
sachant que les ondes ultrasonores sont générées comme ondes de Lamb dans au moins une paroi du récipient de séparation et diffusées selon un angle d'incidence (ϕ) différent de 90° de telle façon qu'un motif d'interférence fixe dont les zones nodales et ventrales résultant de l'angle d'incidence (ϕ) soit généré,
**caractérisé en ce que**
les ondes ultrasonores générées au moyen de transducteurs à ultrasons apposés sur des sections de paroi opposées sont diffusées dans le liquide depuis des côtés opposés l'un de l'autre du récipient de séparation.

2. Procédé selon la revendication 1,
**caractérisé en ce que**
les ondes ultrasonores sont diffusées depuis des surfaces parallèles l'une à l'autre du récipient de séparation.

3. Procédé selon l'une des revendications précédentes,
**caractérisé en ce que**
les ondes ultrasonores sont diffusées de manière synchronisée en phase.

4. Dispositif de séparation de matières de densité diverse à partir de liquides, par ex. de matières solides ou de graisses ou d'huiles à partir d'eau, comprenant un récipient de séparation (10) et des transducteurs à ultrasons (1-6), sachant que les transducteurs à ultrasons sont disposés sur au moins une paroi (11, 12) du récipient de séparation (10) de telle sorte que les ondes ultrasonores soient générées comme ondes de Lamb (8) et diffusées dans le liquide (20) selon un angle d'incidence (ϕ) différent de 90° de telle façon qu'un motif d'interférence (9) fixe dont les zones nodales et ventrales résultant de l'angle d'incidence (ϕ) soit généré,
**caractérisé en ce que**
le récipient de séparation (20) présente deux sections de paroi opposées l'une à l'autre au moins par sections, sur lesquelles les transducteurs à ultrasons (1-6) sont apposés.

5. Procédé selon la revendication 4,
**caractérisé en ce que**
les sections de paroi opposées l'une à l'autre sont parallèles l'une à l'autre.

6. Procédé selon l'une des revendications 4 ou 5,
**caractérisé en ce que**
les transducteurs à ultrasons (1 à 6) sont pilotés de manière synchronisée en phase.
